# EUROPÄISCHE PATENTSCHRIFT

(11) **EP 1 923 581 B1**
(45) Veröffentlichungstag und Bekanntmachung des Hinweises auf die Patenterteilung: **13.06.2012**
(21) Anmeldenummer: 07120768.2
(22) Anmeldetag: 15.11.2007
(51) Int. Cl.: F16B 23/00

(54) **Verschraubungselement**
Threaded device
Elément de vissage

(30) Priorität: 16.11.2006 DE 102006057079
(43) Veröffentlichungstag der Anmeldung: 21.05.2008
(73) Patentinhaber: NEDSCHROEF PLETTENBERG GmbH, 58840 Plettenberg (DE)
(72) Erfinder: Ferreau, Oliver, 58762 Altena (DE); Teper, Emrullah, 44388 Dortmund (DE)
(74) Vertreter: Dörner, Kötter & Kollegen

(56) Entgegenhaltungen:
- EP-A1- 1 676 675
- WO-A1-01/07793
- DE-U1- 8 700 940
- GB-A- 2 421 555
- US-A- 3 929 152
- US-A- 4 938 108
- US-A1- 2004 182 206

## Beschreibung

### I. Anwendungsgebiet

Die Erfindung betrifft ein Verschraubungselement, d. h. eine Schraube oder Mutter, nach dem Oberbegriff des Patentanspruch 1.

### II. Technischer Hintergrund

Solche schwer oder nicht lösbaren Verschraubungselemente sind prinzipiell bereits bekannt, da es Anwendungsfälle gibt, wo ein solches Verschraubungselement nicht von Jedermann und nicht mit den üblich genormten Werkzeugen lösbar sein sollen. Derartige Verschraubungselemente sind für verschiedene Anwendungsfälle bspw. in der EP 1 676 675 A1, der US 3,929,152, der US 4,938,108, der DE 87 00 940 U1oder auch der WO 01/07793 A1 offenbart.

So ist es bei den Radschrauben, die bei einem PKW das Rad an der Nabe halten, bekannt, diesen Radschrauben teilweise eine andere als die übliche Sechskantkontur am Kopf zu geben, so dass sie nur mit einem Spezialwerkzeug gelöst werden können, um den Diebstahl von Rädern zu erschweren.

Des Weiteren ist es von Schrauben mit einem Kreuzschlitz-Kopf bekannt, die Angriffsflächen des Kreuzschlitzes in Anzugs- und Löserichtung unterschiedlich auszugestalten, so dass mit einem üblichen Kreuzschlitz-Schraubendreher eine solche Schraube zwar festgezogen, aber nicht mehr gelöst werden kann.

Ein weiterer aktueller Anwendungsfall für schwer lösbare Schrauben, d. h. nur mit größerem zeitlichen Aufwand zu lösende Schraubverbindungen, ist die Mutter, mit der bei einem Kraftfahrzeug das Massekabel der Batterie an einem Punkt der Karosserie befestigt wird.

Da die meisten Fahrzeuge inzwischen elektronisch gegen Diebstahl und auch das Kurzschließen gesichert sind, ist eine der Voraussetzungen, um das Fahrzeug dennoch starten zu können, das zumindest vorübergehende Unterbrechen der Stromversorgung, was unter anderem durch Lösen der Masseverbindung auf einfache Art und Weise möglich ist.

Falls jedoch der potentielle Dieb hierfür bereits eine erhebliche Zeit aufwenden muss, oder komplett am Lösen dieser Verbindung scheitert, steigt sein Risiko ertappt zu werden mit zunehmendem Zeitaufwand und damit die Chance auf eine Vereitelung des Diebstahles.

### III. Darstellung der Erfindung

### a) Technische Aufgabe

Es ist daher die Aufgabe gemäß der Erfindung, ein Verschraubungselement zu schaffen, welches nach Montage nur mit einem Spezialwerkzeug oder auch überhaupt nicht mehr gelöst werden kann und wobei auch das Herstellen eines passenden Spezialwerkzeuges schwierig und zeitaufwendig ist.

### b) Lösung der Aufgabe

Diese Aufgabe wird durch die Merkmale des Anspruches 1 gelöst. Vorteilhafte Ausführungsformen ergeben sich aus den Unteransprüchen.

Indem Kopfteil und/oder die daran ausgebildeten Angriffsflächen für das Schraubwerkzeug so gestaltet sind, dass im Handel befindliche, genormte Werkzeuge, insbesondere Schraubwerkzeuge nicht angreifen können und dadurch ein Lösen nur mit einem Spezialwerkzeug passend zur Gestaltung des Kopfteiles möglich ist. Die Verteilung und Zugänglichkeit zu diesem Spezialwerkzeug kann jedoch vom Hersteller des Verschraubungselements gesteuert werden.

Im Gegensatz zu bekannten Lösungen befinden sich dabei die Angriffsflächen einerseits an der Außenkontur und andererseits handelt es sich bei dem Verschraubungselement vorzugsweise um eine Mutter, im Gegensatz zu einem Schraubenkopf, bei dem die Angriffsflächen in einer Innenkontur angeordnet sein können.

Bei Angriffsflächen in der Innenkontur ist es jedoch wesentlich leichter, sich manuell ein passendes Spezialwerkzeug durch Abschleifen einer breiteren Schraubenzieherklinge oder ähnlichem anzufertigen, als umgekehrt ein Werkzeug zu schaffen, welches den Außenumfang außen umgreift und halten kann.

Indem die Außenkontur, in der sich die Angriffsflächen befinden, rotationssymmetrisch um die Axialrichtung des Verschraubungselements ausgebildet ist, kann ein einfaches Drehteil als Rohling verwendet werden.

Wenn dabei die Außenkontur im Längsschnitt auch noch ballig geformt ist, wird bereits an der Grundform des Kopfteiles das Ansetzen eines Werkzeuges, wie etwa einer Zange, unmöglich gemacht, vor allem, wenn die Balligkeit nicht vollständig halbkugelförmig ist und damit nicht an dem "Äquatornahen" Bereich der Halbkugel in einer Zange spannbar ist, sondern flach linsenkopfförmig.

Aus dem gleichen Grund ist auch die Anzahl der Angriffsflächen am Kopfteil zum einen ungerade und zum anderen niedrig gehalten, um zu vermeiden, dass sich dabei - bei gleichmäßiger Verteilung über den Umfang - Angriffsflächen einander gegenüberliegend befinden und das Ansetzen einer Zange ermöglicht wird.

Bei einer ungeraden Anzahl von Angriffsflächen und gleichmäßiger Verteilung über den Umfang liegen sich nie zwei Angriffsflächen genau diametral gegenüber, jedoch wird mit steigender Anzahl der Zwischenwinkel zwischen den Angriffsflächen immer kleiner, weshalb die Anzahl möglichst niedrig sein sollte und vorzugsweise nur drei Angriffsflächen vorhanden sind.

Das Lösen der Schraubverbindung wird weiter dadurch erschwert, wenn die Angriffsflächen darüber hinaus über den Umfang des Kopfteiles unsymmetrisch verteilt sind und/oder unterschiedliche Axiallagen einnehmen.

Ebenso ist ein Ergreifen mit einem Universalwerkzeug umso schwieriger, wenn die Angriffsflächen gebogen, insbesondere konkav gebogen, sind, besonders wenn die Biegeachse dabei entweder parallel oder geneigt zur Axialrichtung des Verschraubungselements liegt, beispielsweise konisch geneigt zur Axialrichtung verlaufend und sich zum freien Ende des Kopfteiles hin einander annähern.

Auch eine absatzfreie Angriffsfläche erschwert die Befestigung jedweder Werkzeuge.

Weiterhin von Bedeutung ist der Lösewinkel, d. h. der Winkel zwischen der Tangentialrichtung und dem löseseitigen Auslauf der Angriffsfläche aus der Außenkontur.

Je kleiner dieser ist, umso schwerer kann dort ein Werkzeug angesetzt werden, um die Angriffsfläche in Löserichtung zu drehen.

Vorzugsweise sollte der Lösewinkel daher kleiner als 40° oder gar kleiner als 30° sein.

Wenn sich in axialer Richtung an die Angriffsfläche zusätzlich eine Axialanschlag anschließt, kann der axiale Aufstecktiefe eines Werkzeuges dadurch begrenzt werden, was ebenfalls den Einsatz von Universalwerkzeugen erschwert.

Dennoch kann trotz dieser Maßnahmen mit entsprechendem Aufwand ein Spezialwerkzeug hergestellt oder auch gegen den Willen des Benutzers dieser Schraubelemente beschafft werden und damit das Verschraubungselement, z. B. die Mutter, gelöst werden.

Darüber hinaus kann jedoch durch die spezielle Gestaltung der Angriffsflächen sichergestellt werden, dass auch mit einem exakt passendem Spezialwerkzeug das Verschraubungselement - im Folgenden aus Vereinfachungsgründen und ohne die Erfindung hierauf zu beschränken, kurz "Mutter" genannt - kaum mehr gelöst werden kann:

Wenn die Angriffsflächen so angeordnet sind, dass beim Aufsetzen und Drehen eines Werkzeuges in Löserichtung keinerlei drehfeste Klemmverbindung zwischen Werkzeug und Angriffsflächen eintritt und/oder dabei das Werkzeug auch noch durch die Drehbewegung automatisch in axialer Richtung vom Mutternkopf und damit den Angriffsflächen abgedrängt wird, ist ein Lösen der Mutter nur noch theoretisch möglich.

Die axiale Anpresskraft des Werkzeuges an dem Schraubenkopf muss dann um soviel größer sein als das Lösemoment, dass dies in der Praxis, zumindest rein manuell, nicht mehr aufgebracht werden kann.

Theoretisch wäre der Einsatz eines passend geformten Spezialwerkzeuges in einen Schlagschrauber möglich, aber dies wäre eine weitere Hürde für einen z. B. Dieb, denn selbst wenn er einen solchen Schlagschrauber zur Hand hätte, würde dies erheblichen Lärm bei der Anwendung verursachen.

Zu diesem Zweck wird der an die Angriffsfläche anschließende Axialanschlag ebenfalls schräg gestellt zur Querrichtung positioniert, und zwar in Löserichtung ansteigend zum freien Ende des Kopfes hin.

Vorzugsweise ist die Angriffsfläche selbst dabei zweiteilig ausgebildet, mit einem mehr in Umfangsrichtung verlaufendem Führungsabschnitt und einem quer zur Tangentialrichtung, d. h. etwa in Radialrichtung, stehenden Drehanschlag-Abschnitt, der am anzugseitigen Ende der Angriffsfläche ausgebildet ist.

Ein Spezialwerkzeug drückt beim Festziehen der Mutter somit gegen den Drehanschlag-Abschnitt, der jedoch beim Drehen in die Gegenrichtung, in Löserichtung, funktionslos wird und am anderen Ende der Angriffsfläche nicht vorhanden ist, denn dort läuft die Angriffsfläche ohne Drehanschlag-Abschnitt aus der Außenkontur des Kopfes der Mutter heraus.

Theoretisch besteht nun noch die Möglichkeit, ein Werkzeug durch Drehen in Löserichtung gegenüber den Angriffsflächen zu verklemmen, wie dies bei jedem üblichen Außensechskant ebenfalls der Fall ist, falls die Schrägstellung der Anschlagflächen durch ausreichende axiale Anpresskraft überkompensiert werden kann.

Je stärker dieser Führungsabschnitt jedoch einer koaxialen Ringfläche angenähert ist, der Führungsabschnitt also tangential oder gar ballig konvex ist, umso geringer wird die dabei auftretende Klemmung und umso unmöglicher das Lösen der Mutter.

### c) Ausführungsbeispiele

Ausführungsformen gemäß der Erfindung sind im Folgenden beispielhaft näher beschrieben. Es zeigen:
Fig. 1: Eine nur mit Spezialwerkzeug lösbare Mutter,
Fig. 2: ein erstes Spezialwerkzeug hierfür,
Fig. 3: ein zweites Spezialwerkzeug hierfür, und
Fig. 4: eine nach Verschraubung nicht mehr lösbare Mutter.

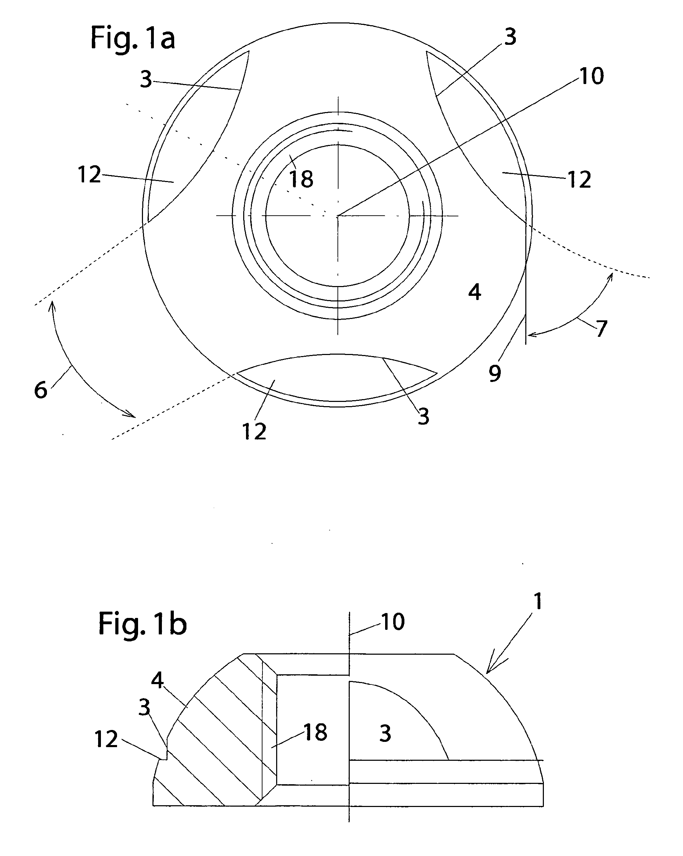

Die Figuren 1 bis 3 dienen lediglich dem besseren Verständnis des Gegenstandes der Erteilung. Sie zeigen keine Verschraubungselemente der beanspruchten Art.

Figur 1a zeigt eine erste erfindungsgemäße Mutter 1 als Verschraubungselement in der Aufsicht, d. h. betrachtet in Axialrichtung 10.

Wie ersichtlich, sind über den Umfang gleichmäßig verteilt drei Angriffsflächen für ein Schraubwerkzeug 20 in der Außenkontur 4 angeordnet. Wie die Seitenansicht dieser Mutter in Figur 1 b, die in der einen Hälfte als Längsschnitt dargestellt ist, zeigt, ist die Außenkontur 4 etwa linsenförmig, indem von einer halbkugeligen Form die Kappe abgeschnitten ist, in der dann der Zugang zum Innengewinde 18 der Mutter, einem Durchgangsgewinde, angeordnet ist.

Noch besser wäre ein flacherer Auslauf der Außenkontur 4 an der unteren Basis fläche, d. h. in einem Winkel von deutlich weniger als 90°, um hier das Ansetzen einer Zange zu verhindern, z. B. wie bei einer Linsenform und einem Winkel von weniger als 50°.

Figur 1a zeigt, dass die Angriffsflächen 3 keine geraden Sekanten sind, sondern ballig konkav gebogen sind, um auch hier das Ansetzen eines Universalwerk- Zeuges, wie etwa einer Zange etc, zu erschweren.

Zwar wird gegenüber der Verwendung dreier reiner Sekanten, die zueinander einen Zwischenwinkel 6 von genau 60° bieten, der Zwischenwinkel 6 sogar verkleinert, was das Ansetzen einer Zange oder eines anderen Universalwerkzeuges prinzipiell erleichtert, aber hiersteht das Erschweren des Ansetzens durch eine gebogene Angriffsfläche im Vordergrund, weshalb aber dennoch der Zwischenwinkel zumindest größer als 40°, zumindest aber größer als 30° bleiben sollte.

Der Biegeradius der Angriffsfläche 3 ist dabei mindestens so groß, vorzugsweise um den Faktor 1,5 größer als der Radius der Außenkontur der Mutter 1 in der Aufsicht der Figur 1a betrachtet.

Das Ansetzen jedweder Werkzeuge kann durch zusätzliche Maßnahmen weiter erschwert werden, beispielsweise indem die Angriffsflächen 3 nicht gleichmäßig, sondern ungleichmäßig über den Umfang auf verschiedenen axialen Höhen verteilt werden, betrachtet in der Seitenansicht, oder eine im Einzelnen voneinander abweichende Kontur und Dimensionierung aufweisen.

Weiterhin wird darauf geachtet, dass auf dem löseseitigen Ende der Angriffsfläche, d. h. der Mündung in der Außenkontur 4, der Lösewinkel 7 zwischen der Tangentialrichtung 9 und dem löseseitigen Auslauf der Angriffsfläche 3 kleiner als 40°, besser kleiner als 30° bleibt, um hier keinen löseseitigen Drehanschlag für irgendein Werkzeug zu bieten.

Ebenso sollen die Angriffsflächen 3 nicht genau diametral einander gegenüberliegend angeordnet werden, um ein Ansetzen von zweischenkligen normalen Zangen zu vermeiden.

Aus diesem Grund ist bevorzugt eine ungerade Anzahl von Angriffsflächen gewählt und zwar mit niedriger Gesamtanzahl, insbesondere nur 3 Angriffsflächen.

In axialer Richtung endet die Angriffsfläche 3 an einem Axialanschlag 12, der als Anschlagfläche parallel zur Basisfläche der Mutter, also lotrecht zur Axialrichtung 10 verläuft, und in der bezeichneten Bauform bei allen drei Angriffsflächen auf gleicher Höhe.

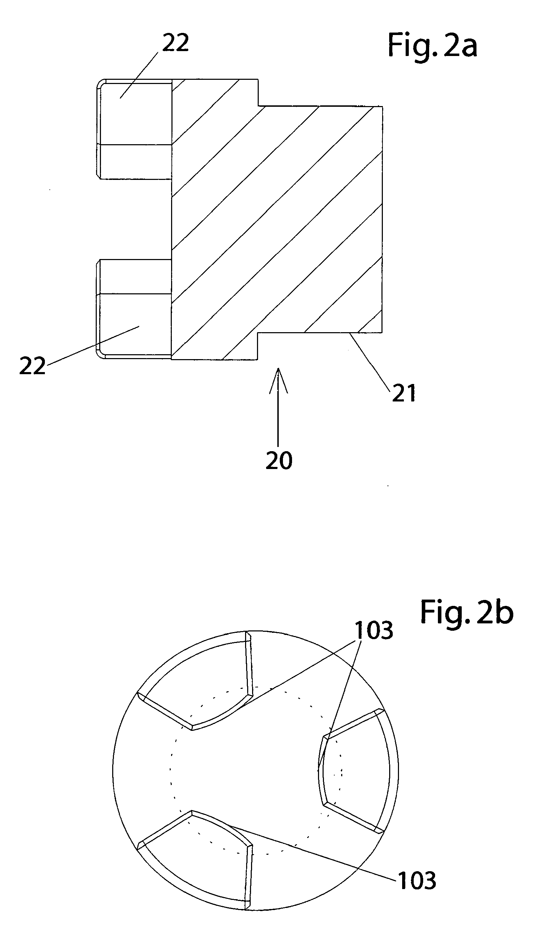

Figur 2 zeigt ein von der Grundform her etwa zylindrisches Schraubwerkzeug 20 in Form eines Adapters, welches auf der in Figur 2a, dem Längsschnitt, rechten Rückseite einen üblichen Außensechskant 21 zum Einsetzen in ein Normwerk-Normwerkzeug aufweist und an der gegenüberliegenden, in Figur 2a linken Seite, zum Ansetzen an die Mutter der Figur 1, gestaltet ist:

Dabei ragen dort drei Fortsätze 22 über die restliche Stirnfläche des Werkzeuges 20 axial fort, die auf den Innenflächen/ Angriffsflächen 103 passend zu den Angriffsflächen 3 der Mutter aufweisen.

Der Vorteil dieser einzelnen Fortsätze 22 besteht darin, dass die mittels spanender Bearbeitung auf einer z. B. Universalfräsmaschine aus einem zylindrischen Rohling leicht hergestellt werden können.

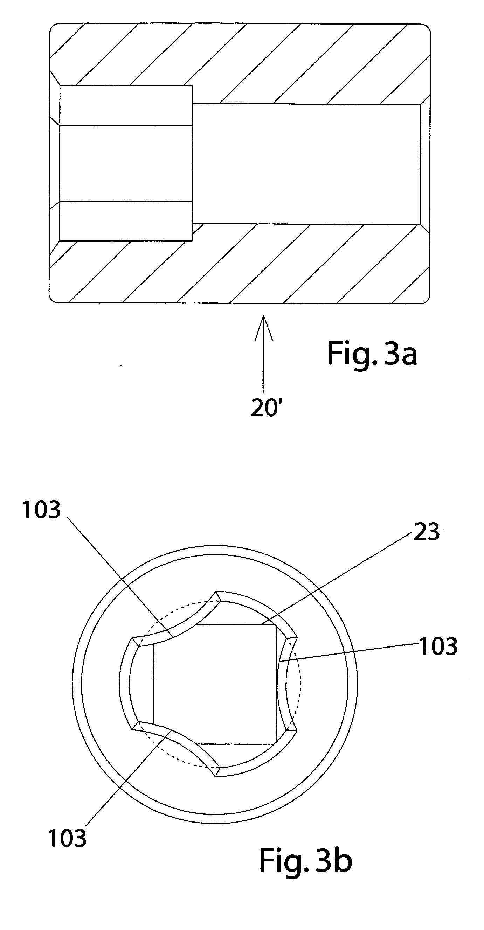

Das Werkzeug 20' der Figur 3 unterscheidet sich von demjenigen der Figur 2 dadurch, dass sich die Angriffsflächen 103 nicht auf den Innenseiten einzelner, in Umfangsrichtung voneinander getrennter, Fortsätze befinden, sondern Teile der Innenkontur eines Sackloches 23 sind und entweder nur mit einem sehr kleinen Fräser zeitaufwendig hergestellt werden können, oder mit Hilfe eines Kaltumform-prozesses, wofür jedoch eine entsprechende Matrize zur Verfügung stehen muss.

Mit Spezialwerkzeugen gemäß den Figuren 3 und 2, kann die Mutter gemäß Figur 1 nicht nur festgezogen, sondern auch wieder gelöst werden, zumal Löseseite und Anzugseite der Angriffsflächen 3 bei dieser Mutter symmetrisch gestaltet sind.

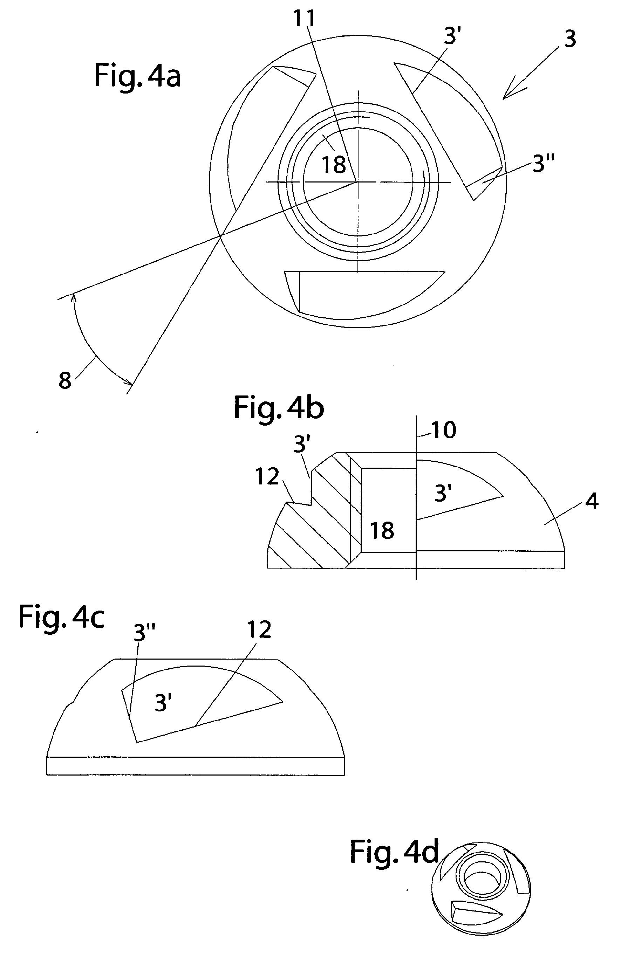

Figur 4 zeigt dagegen eine erfindungsgemäße Mutter, die nur noch mit großem Aufwand oder überhaupt nicht lösbar ist:

Erreicht wird dies durch die gegenüber der Mutter der Figur 1 zusätzlich vorhandenen Unterschiede:

Zum einen ist die Angriffsfläche 3 zweiteilig ausgebildet, indem sie neben der etwa in Tangentialrichtung, d. h. als Sekante, verlaufenden Führungsabschnitt 3', der in diesem Fall nicht konkav sondern gerade ausgebildet ist, einen hierzu im Winkel stehenden Drehanschlagabschnitt 3", aufweist.

Dieser verläuft nicht genau in Radialrichtung 11, sondern ist gegenüber der Radialrichtung sogar um einen negativen, d. h. in Gegenuhrzeigersinn bei einem normalen Rechtsgewinde verlaufenden, spitzen Winkel schräg gestellt, so dass dieser Drehanschlagabschnitt 3" bei Betrachtung in der Seitenansicht, also genau in radialer Richtung, sogar einen Hinterschnitt bildet.

Zu dem ebenen Führungsabschnitt 3' bildet er einen rechten Winkel.

Beim Ansetzen eines passenden Spezialwerkzeuges drückt das Spezialwerkzeug beim Festziehen primär gegen diesen Drehanschlagabschnitt 3" und dreht die Mutter damit in Umfangsrichtung im Uhrzeigersinn.

Beim Drehen in die Gegenrichtung könnte sich ein solches Werkzeug jedoch lediglich an den Führungsabschnitten 3' verklemmen und dadurch die Mutter in Drehrichtung gegen den Uhrzeigersinn mitnehmen. Dies wird jedoch erschwert oder gar verhindert, in dem in der Löserichtung der Axialanschlag 12 in axialer Richtung in Löserichtung ansteigt, so dass ein entsprechendes Werkzeug axial entlang des Kopfteiles hochgleiten und immer weniger Angriffsfläche finden wird.

Dies kann zusätzlich gefördert werden, indem auch die Verklemmung eines entsprechenden Werkzeuges an den Führungsabschnitten 3' erschwert wird, was dann der Fall ist, je mehr diese Führungsfläche der koaxialen Umfangsrichtung um die Axialrichtung 10 angenähert wird, beispielsweise in dem die Führungsabschnitte 3' nicht gerade, sondern konvex ballig ausgebildet werden.

### BEZUGSZEICHENLISTE

- 1: Verschraubungselement
- 2: Kopfteil
- 3: Angriffsfläche
- 3': Führungsabschnitt
- 3": Drehanschlag-Abschnitt
- 4: Außenkontur
- 5:
- 6: Zwischenwinkel
- 7: Lösewinkel
- 8: Anzugwinkel
- 9: Tangentialrichtung
- 10: Axialrichtung
- 11: Radialrichtung
- 12: Axialanschlag
- 18: Innengewinde
- 19: Schraubwerkzeug
- 21: Sechskant
- 22: Fortsatz
- 23: Sackloch

## Patentansprüche

1. Verschraubungselement zur Befestigung eines Batteriemassekabels eines Kraftfahrzeuges an dessen Karosserie, mit einem Kopfteil, das eine rotationssymmetrisch um die Axialrichtung (10) des Verschraubungselementes (1), im Längsschnitt ballig ausgebildete Außenkontur aufweist, an der wenigstens eine Angriffsfläche (3) für ein Schraubwerkzeug angeordnet ist, wobei das Kopfteil (2) und/oder die Angriffsfläche so gestaltet sind, dass genormte Schraubwerkzeuge daran nicht angreifen können zum Lösen des Verbindungselements (1), **dadurch gekennzeichnet, dass**
die Angriffsfläche (3) zweiteilig ausgebildet ist, mit einem mehr in Umfangsrichtung verlaufenden Führungsabschnitt (3') und einem quer zur Tangentialrichtung (9) stehenden, am anzugseitigen Ende des Führungsabschnitts (3') angeordneten Drehanschlag-Abschnitt (3"), wobei der Drehanschlag-Abschnitt (3") bezüglich der radialen Richtung (11) einen Hinterschnitt bildet und an den Drehanschlag-Abschnitt (3") und den Führungsabschnitt (3') der Angriffsfläche (3) ein Axialanschlag (12) als dritte Fläche angrenzt, der in radialer Richtung betrachtet vom anzugseitigen Ende zum löseseitigen Ende hin in Richtung des freien Endes des Kopfteiles (2), von welcher her das Schraubwerkzeug aufgesetzt wird, über seine Länge ansteigt, d.h., einem aufzusetzenden Werkzeug in axialer Richtung entgegen.

2. Verschraubungselement (1) nach einem der vorhergehenden Ansprüche, **dadurch gekennzeichnet, dass**
- die Außenkontur (4) insbesondere halbkugelförmig,
ausgebildet ist, insbesondere linsenkopfförmig ist, und/oder
- am Kopfteil (2) eine ungerade, niedrige Anzahl von Angriffsflächen (3) vorhanden ist, insbesondere drei Angriffsflächen (3).

3. Verschraubungselement (1) nach einem der vorhergehenden Ansprüche, **dadurch gekennzeichnet, dass**
- die Angriffsflächen (3) über den Umfang des Außenkopfteils (2), insbesondere dessen Außenkontur (4), unsymmetrisch verteilt sind, und/oder
- die Angriffsflächen (3) am Kopfteil (2) unterschiedliche axiale Lagen einnehmen.

4. Verschraubungselement (1) nach einem der vorhergehenden Ansprüche, **dadurch gekennzeichnet, dass**
- der Zwischenwinkel (6) zwischen zwei benachbarten Enden von Angriffsflächen (3a, b) größer als 40°, insbesondere größer als 50° ist.

5. Verschraubungselement (1) nach einem der vorhergehenden Ansprüche, **dadurch gekennzeichnet, dass**
- zwei Angriffsflächen (3) nicht einander diametral gegenüberliegend bezüglich der axialen Mitte angeordnet sind.

6. Verschraubungselement (1) nach einem der vorhergehenden Ansprüche, **dadurch gekennzeichnet, dass**
- die Angriffsflächen (3) absatzfrei sind und/oder
- der Lösewinkel (7) zwischen der Tangentialrichtung (9) und einer Angriffsfläche (3) am löseseitigen Auslauf dieser Angriffsfläche (3) aus der Außenkontur (4) kleiner als 40°, insbesondere kleiner als 30° ist.

7. Verschraubungselement (1) nach einem der vorhergehenden Ansprüche, **dadurch gekennzeichnet, dass**
- der Drehanschlag-Abschnitt (3") zur Tangentialrichtung (9) einen Winkel von mehr als 50°, insbesondere mehr als 60°, insbesondere mehr als 70° einnimmt.

8. Verschraubungselement (1) nach einem der Ansprüche 1 bis 3 sowie 6 und 7, **dadurch gekennzeichnet, dass**
- der Führungsabschnitt (3') tangential oder ballig konvex, insbesondere koaxial zur Axialrichtung (10), verläuft.

9. Verschraubungselement (1) nach einem der vorhergehenden Ansprüche, **dadurch gekennzeichnet, dass**
- der Führungsabschnitt (3') an dem vom Drehanschlag-Abschnitt (3") gegenüberliegenden, löseseitigen Ende in der Kontur, insbesondere der Außenkontur (4), des Kopfteiles (2) ausläuft.

10. Verschraubungselement (1) nach einem der vorhergehenden Ansprüche, **dadurch gekennzeichnet, dass**
- Drehanschlag-Abschnitt (3") und Axialanschlag (12) in einem Winkel von weniger als 140°; insbesondere weniger als 120°, insbesondere weniger als 100° zueinander stehen.

11. Verschraubungselement (1) nach einem der vorhergehenden Ansprüche, **dadurch gekennzeichnet, dass**
Drehanschlag-Abschnitt (3") und Führungsabschnitt (3') in einem Winkel von weniger als 140°, insbesondere weniger als 120°, insbesondere weniger als 90° zueinander stehen.

## Claims

1. Threaded device for fastening the earth cable of a battery in a vehicle to its bodywork, with a head section, which has a rotationally symmetrical outer contour whose longitudinal section is formed as a crown around the axial direction (10) of the threaded device (1), on which at least one driving flat (3) is arranged for a bolting tool, where the head section (2) and/or the driving flat are formed in such a way that standard tensioning tools cannot fit onto it to loosen the threaded device (1) **characterised in that**
the driving flat (3) is formed in two parts with one guiding section (3') running more in circumferential direction and a rotation-stop section (3") arranged perpendicularly to the tangential direction (9) standing at the tensioning end of the guiding section (3'), where the rotation-stop section (3") forms an undercut with reference to the radial direction (11) and an axial stop (12) adjoins the rotation-stop section (3") and the guiding section (3') of the driving flat (3) as third surface which rises along its length, (i.e. in the axial direction towards a tool being fitted into position) looking in the radial direction from the tensioning to the loosening end in the direction of the free end of the head section (2), from which the tensioning tool is fitted into position.

2. Threaded device (1) according to any of the preceding claims, **characterised in that**
- the outer contour (4) is preferably hemispherical in shape and preferably dome-shaped, and/or
- there is a low odd number of driving flats (3) on the head section (2), preferably three driving flats (3).

3. Threaded device (1) according to any of the preceding claims, **characterised in that**
- the driving flats (3) are distributed asymmetrically over the circumference of the outer head section (2), in particular its outer contour (4) and/or
- the driving flats (3) on the head section (2) have different axial lengths.

4. Threaded device (1) according to any of the preceding claims, **characterised in that**
- the angle (6) intervening between two adjacent ends of driving flats (3a, b) is greater than 40°, and preferably greater than 50°.

5. Threaded device (1) according to any of the preceding claims, **characterised in that**
- two driving flats (3) are not diametrically opposite one another with reference to their axial centre.

6. Threaded device (1) according to any of the preceding claims, **characterised in that**
- the driving flats (3) have no shoulder and/or
- the loosening angle (7) between the tangential direction (9) and a driving flat (3) on the runout of that driving flat (3) from the outer contour (4) on the loosening side is less than 40° and preferably less than 30°.

7. Threaded device (1) according to any of the preceding claims, **characterised in that**
- the rotation-stop section (3") is at an angle of more than 50°, preferably more than 60° and preferably more than 70° to the tangential direction (9).

8. Threaded device (1) according to any of the claims 1 to 3 and 6 to 7, **characterised in that**
- the guiding section (3') runs tangentially or convexly crown-shaped, preferably coaxially to the axial direction (10).

9. Threaded device (1) according to any of the preceding claims, **characterised in that**
- the guiding section (3') on the loosening side opposite the rotation-stop section (3") runs out in the contour, preferably the outer contour (4), of the head section (2).

10. Threaded device (1) according to any of the preceding claims, **characterised in that**
- the rotation-stop section (3") and the axial stop (12) are at an angle of less than 140°, preferably less than 120°, and preferably less than 100° to one another.

11. Threaded device (1) according to any of the preceding claims, **characterised in that**, the rotation-stop section (3") and the guiding section (3') are at an angle of less than 140°, preferably less than 120°, and preferably less than 90° to one another.

## Revendications

1. Élément de vissage destiné à fixer un câble de masse de batterie d'un véhicule motorisé contre sa carrosserie, avec une partie têtière présentant un contour extérieur configuré bombé en coupe longitudinale, en symétrie de révolution autour de la direction axiale (10) de l'élément de vissage (1), contour extérieur contre lequel est agencée au moins une surface d'attaque (3) pour un outil de vissage, sachant que la partie têtière (2) et/ou la surface d'attaque sont configurées de telle sorte que des outils de vissage normalisé ne peuvent pas les attaquer pour desserrer l'élément de liaison (1), **caractérisé en ce que** la surface d'attaque (3) est configurée en deux parties, avec un segment de guidage (3') présentant un tracé plus dans le sens circonférentiel, et un segment (3") à butée rotative transversal au sens tangentiel (9), agencé à l'extrémité côté serrage du segment de guidage (3'), sachant que le segment (3") à butée de serrage présente une contre-dépouille relativement au sens radial (11), et que contre le segment (3") à butée rotative et le segment de guidage (3') de la surface d'attaque aboutit une butée axiale (12) en tant que troisième surface, butée qui lorsque observée dans le sens radial, de l'extrémité côté serrage à l'extrémité côté desserrage en direction de l'extrémité libre de la partie têtière (2) depuis laquelle l'outil de vissage est appliqué, monte sur sa longueur, c'est-à-dire à la rencontre, dans le sens axial, d'un outil à appliquer.

2. Élément de vissage (1) selon l'une des revendications précédentes, **caractérisé en ce que**
- le contour extérieur (4) est configuré en particulier de forme hémisphérique, en particulier en forme de tête lenticulaire, et/ou
- contre la partie têtière (2) est présent un nombre impair réduit de surfaces d'attaque (3), en particulier trois surfaces d'attaque (3).

3. Élément de vissage (1) selon l'une des revendications précédentes, **caractérisé en ce que**
- les surfaces d'attaque (3) sont réparties asymétriquement sur la circonférence de la partie têtière extérieure (2) en particulier sur son contour extérieur (4), et/ou que
- les surfaces d'attaque (3) prennent différentes positions axiales au niveau de la partie têtière (2)

4. Élément de vissage (1) selon l'une des revendications précédentes, **caractérisé en ce que**
- l'angle intermédiaire (6) entre deux extrémités voisines de surfaces d'attaque (3a, b) est supérieur à 40°, et notamment supérieur à 50°.

5. Élément de vissage (1) selon l'une des revendications précédentes, **caractérisé en ce que**
- deux surfaces d'attaque (3) ne sont pas agencées de façon diamétralement opposées relativement à leur centre axial.

6. Élément de vissage (1) selon l'une des revendications précédentes, **caractérisé en ce que**
- les surfaces d'attaque (3) sont sans épaulement et/ou que
- l'angle de desserrage (7) entre la direction tangentielle (9) et une surface d'attaque (3) en sortie côté desserrage de cette surface d'attaque (3) hors du contour extérieur (4) est inférieur à 40°, en particulier inférieur à 30°.

7. Élément de vissage (1) selon l'une des revendications précédentes, **caractérisé en ce que**
- les segment à butée rotative (3") forment par rapport à la direction tangentielle (9) un angle de plus de 50°, préférentiellement supérieur à 60°, préférentiellement supérieur à 70°.

8. Élément de vissage (1) selon l'une des revendications 1 à 3 et 6 et 7, **caractérisé en ce que**
- Le segment de guidage (3') présente un tracé tangentiel ou convexe, en particulier coaxial au sens axial (10).

9. Élément de vissage (1) selon l'une des revendications précédentes, **caractérisé en ce que**
- le segment de guidage (3') aboutit à l'extrémité dans le contour - en particulier du contour (4) extérieur de la partie têtière (2) - sur le côté desserrage située en face du segment (3") à butée de rotation.

10. Élément de vissage (1) selon l'une des revendications précédentes, **caractérisé en ce que**
- le segment (3") à butée rotative et la butée axiale (12) forment réciproquement un angle inférieur à 140°, en particulier inférieur à 120°, en particulier inférieur à 100°.

11. Élément de vissage (1) selon l'une des revendications précédentes, **caractérisé en ce que** le segment (3") à butée rotative et le segment de guidage (3') forment réciproquement un angle inférieur à 140°, en particulier inférieur à 120°, en particulier inférieur à 90°.
